# EUROPEAN PATENT SPECIFICATION

(11) **EP 2 428 437 B1**
(45) Date of publication and mention of the grant of the patent: **15.07.2015**
(21) Application number: 11178773.5
(22) Date of filing: 25.08.2011
(51) Int. Cl.: B62J 17/02, B62J 17/06

(54) **Leg shield structure of saddle-ride-type vehicle**
Beinschutzstruktur eines Fahrzeugs mit Sattel
Structure de protège-jambe de véhicule à monture à selle

(30) Priority: 09.09.2010 JP 2010201815
(43) Date of publication of application: 14.03.2012
(73) Proprietor: Honda Motor Co., Ltd., Tokyo 107-8556 (JP)
(72) Inventor: Tsukui, Hiroaki, Saitama, 351-0193 (JP); Nagata, Masato, Saitama, 351-0193 (JP)
(74) Representative: Beder, Jens

(56) References cited:
- GB-A- 2 131 757
- JP-A- 11 278 338
- JP-A- 2010 042 755

## Description

The present invention relates to a saddle-ride-type vehicle with leg shield structure which covers leg portions of a rider sitting on a seat from a front side in the saddle-ride-type vehicle.

Conventionally, there has been disclosed the leg shield structure of a scooter type vehicle which is constituted of an upper cover and a lower cover (JP-A-10-167146).

In the above-mentioned structure, there may be a case where an upper cover (10a) is constituted of a coated part and a lower cover (10b) is constituted of a non-coated colored part with black or the like. When a scooter-type vehicle having such constitution falls sideways, the lower cover which is constituted of the colored part becomes a bumper which is brought into contact with a ground thus easily preventing a coated surface of the upper cover which is constituted of a coated part from being damaged.

However, the above-mentioned conventional structure has a drawback that when the cover is brought into contact with the ground to an extent that a portion of the cover in the vicinity of an upper portion of the vehicle is also brought into contact with the ground, the protection of the coated surface is difficult. On the other hand, the cover structure is requested to be designed such that the windshield performance is enhanced.

In GB 231 757 A there is disclosed a saddle-ride-type vehicle with a leg shield. The vehicle comprises a seat and a leg shield that is arranged in front of the seat and which covers a leg portion of the rider. The leg shield has a coded surface portion and a colored surface portion, wherein the leg shield is constituted of an outer leg shield and an inner leg shield that is arranged behind the outer leg shield. The inner leg shield has a front portion which is arranged more inside in the vehicle width wise direction and a rear portion of the inner leg shield that is arranged more outside in the vehicle width wise direction than the outer leg shield. Thus, the rear portion forms a bumper portion. The bumper portion includes a middle bumper portion extending in substantially straight line in the vertical direction of the vehicle.

The present invention has been made in view of the above-mentioned circumstance, and it is an object of the present invention to protect, in a saddle-ride-type vehicle provided with a leg shield having a coated surface and a colored surface, a portion to which the coated surface is applied by bringing the colored surface into contact with a ground even when the vehicle falls sideways such that the leg shield is brought into contact with the ground to an extent that a portion of the leg shield in the vicinity of an upper portion of the vehicle is also brought into contact with the ground, and also to enhance the windshield performance.

As a means for solving the problem, the invention described in claim 1 is directed to the leg shield structure of a saddle-ride-type vehicle which includes: a seat (10) on which a rider sits; and a leg shield (11, 12B, 13C) which is arranged in front of the seat (10) and covers a leg portion of the rider from a front side, the leg shield (11, 12B, 13C) including a coated surface portion (17) to which coating is applied and a colored surface portion (18, 19) where a ground of a raw material is exposed, characterized in that the leg shield (11, 12B, 13C) is constituted of an outer leg shield (11) which includes the coated surface portion (17), and an inner leg shield (12B, 13C) which includes the colored surface portion (18, 19), is arranged behind the outer leg shield (11) and has a front portion thereof arranged more inside in the vehicle widthwise direction than the outer leg shield (11), and a rear portion of the inner leg shield (12B, 13C) is arranged more outside in the vehicle widthwise direction than the outer leg shield (11) thus forming a bumper portion (21). The bumper portion (21) of the inner leg shield (12B, 13C) includes a middle bumper portion (22) which extends in a substantially straight line in the vertical direction of the vehicle, and an upper bumper portion (23) which is connected to an upper rear end of the middle bumper portion (22) and extends outward in the vehicle widthwise direction as the upper bumper portion (23) extends toward an upper side of the vehicle.

The invention described in claim 2 is characterized in that the bumper portion (21) of the inner leg shield (12B, 13C) includes a lower bumper portion (24) which is arranged to be routed around a lower side of the outer leg shield (11).

The invention described in claim 3 is characterized in that the upper bumper portion (23) includes an upright bumper portion (25) which is arranged with a gap formed between the upright bumper portion (25) and a rear edge of the outer leg shield (11) and extends in the vertical direction of the vehicle, and a fin bumper portion (26) which extends in the longitudinal direction of the vehicle or in the rearward and upward direction from a front side of the vehicle and intersects with the upright bumper portion (25) in a T shape.

The invention described in claim 4 is characterized in that a recessed portion (28) which is recessed inward in the vehicle widthwise direction and extends in the longitudinal direction of the vehicle or in the rearward and upward direction from a front side of the vehicle is formed on a side wall of the outer leg shield (11).

### [Advantageous effect of the Invention]

According to the invention described in claim 1, the inner leg shield having the colored surface portion is arranged to project outward in the vehicle widthwise direction from the rear portion of the outer leg shield and the rear portion of the inner leg shield functions as the bumper portion arranged more outside in the vehicle widthwise direction than the outer leg shield. Accordingly, even when the inner leg shield is brought into contact with a ground to an extent that a portion of the inner leg shield in the vicinity of an upper portion of the vehicle is brought into contact with the ground in a state where the vehicle falls sideways, it is possible to bring the colored bumper portion into contact with the ground first and hence, the outer leg shield having the coated surface can be easily protected. Further, by forming the inner leg shield into a shape where the inner leg shield extends outward in the vehicle widthwise direction as the inner leg shield extends rearward, it is possible to make traveling wind flow outward in the vehicle widthwise direction more positively and hence, a windshield effect of the leg shield can be enhanced. According to the invention even when an upper portion of the vehicle is brought into contact with the ground when the vehicle falls sideways, by bringing the upper bumper portion into contact with the ground, the outer leg shield can be easily protected.

According to the invention described in claim 2, by bringing the lower bumper portion into contact with the ground first when the vehicle falls sideways, it is more surely possible to bring the inner leg shield into contact with the ground first and hence, the outer leg shield can be easily protected.

According to the invention described in claim 3, the rigidity of the bumper can be enhanced by forming a ground contact portion of the upper bumper portion into a T shape, and the strength of the bumper can be easily secured by further elongating the ground contact portion.

According to the invention described in claim 4, by making a traveling wind impinge on an inclined surface of the inner leg shield more positively, it is possible to deflect the traveling wind outward in the vehicle widthwise direction.

Fig. 1 A left side view of a motorcycle according to an embodiment of the present invention.
Fig. 2 A left side view of a front portion of the motorcycle.
Fig. 3 A front view of the motorcycle.
Fig. 4 A cross-sectional view taken along a line A-A in Fig. 3.
Fig. 5 A cross-sectional view taken along a line B-B in Fig. 3.
Fig. 6 A cross-sectional view taken along a line C-C in Fig. 3.
Fig. 7 A cross-sectional view taken along a line D-D in Fig. 3.

Hereinafter, an embodiment of the present invention is explained in conjunction with drawings. Here, in the drawings used in the explanation made hereinafter, an arrow FR indicates a front side of a vehicle, an arrow UP indicates an upper side of the vehicle, and an arrow LH indicates a left side of the vehicle. Further, in the drawings, symbol CL1 indicates a center line which passes a center point in the vehicle widthwise direction and extends in the vertical direction, and symbol CL2 indicates a center line which passes the center point in the vehicle widthwise direction and extends in the longitudinal direction.

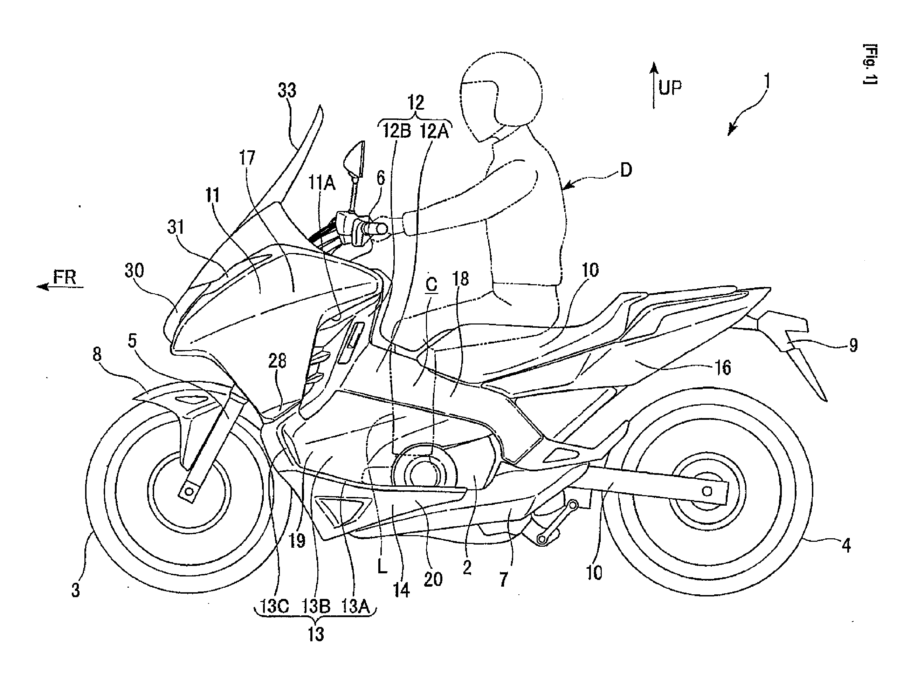

Fig. 1 to Fig. 3 show a scooter-type motorcycle 1 to which the structure according to this embodiment is applied. An engine 2 is mounted on an approximately center portion of the motorcycle 1 in the longitudinal direction of a vehicle body. A front wheel 3 is arranged in front of the engine 2, and a rear wheel 4 is arranged behind the engine 2. The front wheel 3 is rotatably supported on a pair of left and right front forks 5, and a steering handle 6 is mounted on an upper portion of the front forks 5. The front forks 5 is rotatably supported on a front end of a vehicle body frame (omitted in the drawing) which forms a basic skeleton of the vehicle body.

A front fender 8 is arranged above the front wheel 3, and a rear fender 9 is arranged above the rear wheel 4. The rear wheel 4 is rotatably supported on a rear end of a swing arm 7, and a front end of the swing arm 7 is supported on a lower portion of the vehicle body frame in a vertically swingable manner. The vehicle body frame is covered with a vehicle body cover C, and a seat 10 on which a rider D sits is arranged above the engine 2. The vehicle body cover C is constituted of a plurality of resin covers.

In the vehicle body cover C, an outer leg shield 11 extends toward both sides of the vehicle from a front side of the front fork 5, covers a front portion and front side portions of the vehicle body, and also covers leg portions L of the rider D who sits on the seat 10 from a front side. A front portion of the outer leg shield 11 is partially divided at an approximately center area in the vehicle widthwise direction, and a headlight 30 is arranged at the center of a space formed by the division. Left and right blinkers 31, 32 are arranged on left and right sides of the headlight 30 respectively, and a screen 33 is fixed to the outer leg shield 11 above the headlight 30.

Upper side body covers 12 are arranged behind the outer leg shield 11, and the upper side body covers 12 extend rearward and downward in the longitudinal direction of the vehicle and reach a position below a front portion of the seat 10 thus covering upper side portions of the vehicle body. Lower side body covers 13 are arranged below the upper side body covers 12. The lower side body covers 13 extend rearward in the longitudinal direction of the vehicle from a rear side of the outer leg shield 11 and cover side portions of the engine 2.

Lower portions of the lower side body covers 13 project outward in the vehicle widthwise direction, and step floor portions 13A on which the rider D places his leg portions L are formed on the lower side body covers 13. The outer leg shield 11 is positioned in front of the step floor portions 13A and covers the leg portions L of the rider D.

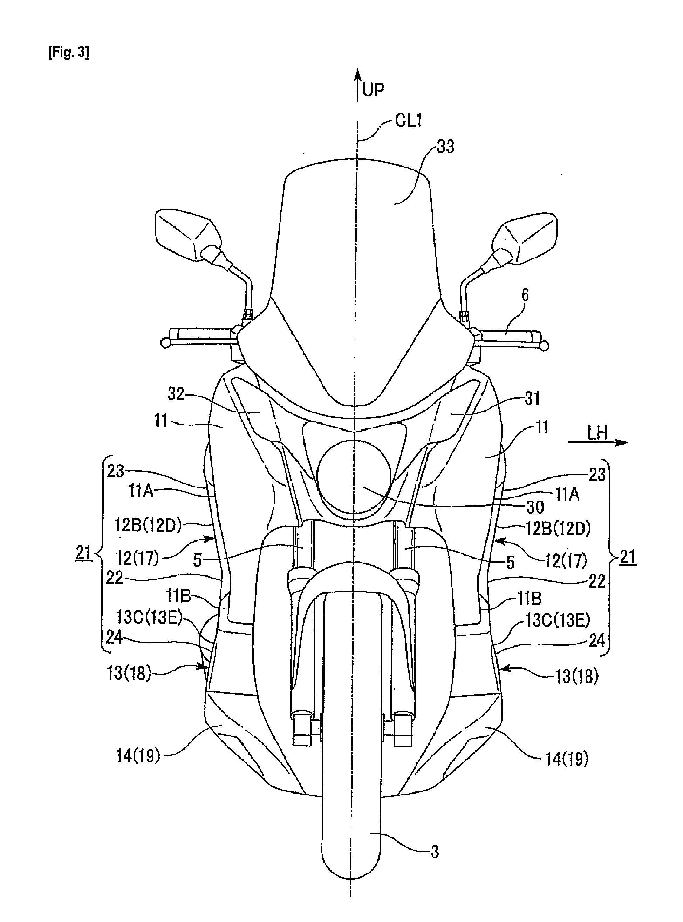

Step side panels 14 are arranged below the step floor portions 13A of the lower side body covers 13. The step side panels 14 extend rearward in the longitudinal direction of the vehicle and cover lower side portions of the engine 2, and are formed into a shape extending inwardly in the vehicle widthwise direction as the step side panels 14 extend in the downward direction of the vehicle as viewed from a front side of the vehicle as shown in Fig. 3 so as to secure a bank angle. Further, gaps are formed between rear portions of the lower side body covers 13 and rear portions of the step side panels 14, and the engine 2 is partially exposed to the outside through the gaps.

Under covers 15 (Fig. 1) are arranged below the step side panels 14. The under covers 15 extend rearward and upward in the longitudinal direction of the vehicle at a gentle angle, and rear portions of the under covers 15 are partially contiguously formed with lower portions of the upper side body covers 12 thus forming the exterior of the vehicle. Further, rear body covers 16 arranged below the seat 10 extend along the extending direction of the seat 10 and cover rear side portions of the vehicle body.

The above-mentioned respective covers are supported on the vehicle body frame and the like, and the covers arranged adjacent to each other are engaged with each other at proper portions thereof. In the vehicle body cover C, the upper side body covers 12, the lower side body covers 13, the step side panels 14, the under covers 15, and the rear body covers 16 are arranged in left right pair respectively.

Coating is applied to an outer wall of the outer leg shield 11, and the outer leg shield 11 has coating surface portions 17 at portions thereof exposed to the outside. On the other hand, coloring is applied to a raw material of the upper side body covers 12, the lower side body covers 13, and the step side panels 14. In the drawings, symbols 18, 19, 20 indicate colored surface portions of the upper side body covers 12 where a surface of the raw material is exposed, colored surface portions of the lower side body covers 13, and colored surface portions of the step side panels 14 respectively.

The upper side body cover 12 is constituted of an upper side cover body 12A which extends in the longitudinal direction of the vehicle and covers the side portion of the vehicle body, and an upper inner leg shield portion 12B which extends outward in the vehicle widthwise direction from a front portion of the upper side cover body 12A and covers a rear surface of the outer leg shield 11.

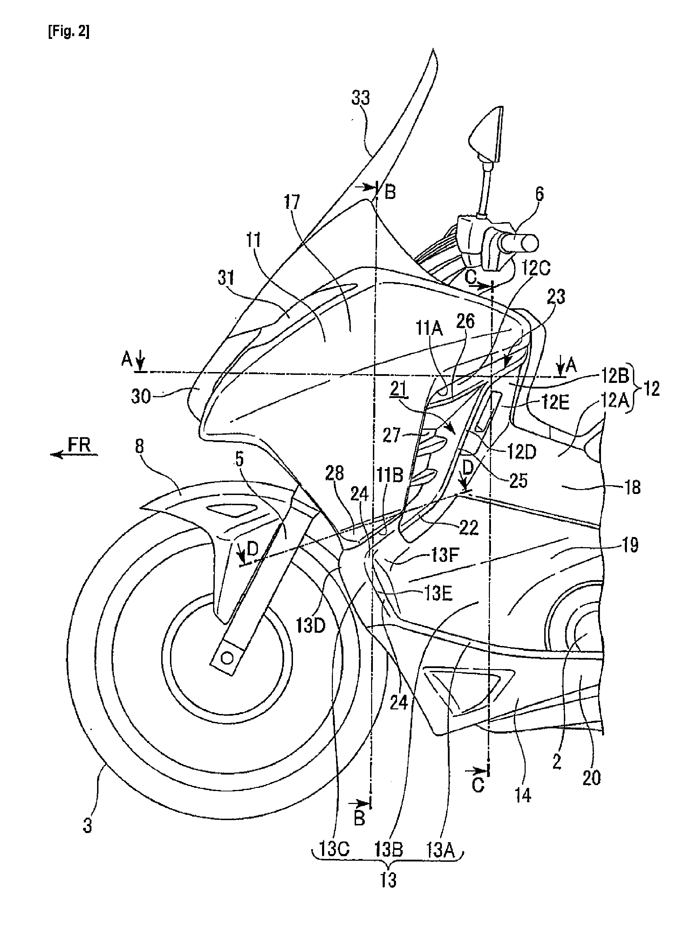

As shown in Fig. 2, the upper inner leg shield portion 12B includes a front portion 12C having an L shape as viewed in a side view which is brought into contact with a rear end portion 11A of the L-shaped outer leg shield 11 which is recessed frontward as viewed in a side view, a rear side portion 12D which is positioned behind a side wall which extends rearward from the front portion 12C, and a rear surface portion 12E which extends inward in the vehicle widthwise direction from the rear side portion 12D.

The lower side body cover 13 includes a lower side cover body 13B which extends in the longitudinal direction of the vehicle and covers a side portion of the vehicle body, and a lower inner leg shield portion 13C which extends outward in the vehicle widthwise direction from a front portion of the lower side cover body 13B and covers a rear surface of the outer leg shield 11. The lower inner leg shield portion 13C includes a front portion 13D having an L shape as viewed in a side view, a rear side portion 13E having an L shape as viewed in a side view which is positioned behind a side wall which extends rearward from the front portion 13D, and a rear surface portion 13F which extends inward in the vehicle widthwise direction from the rear side portion 13E.

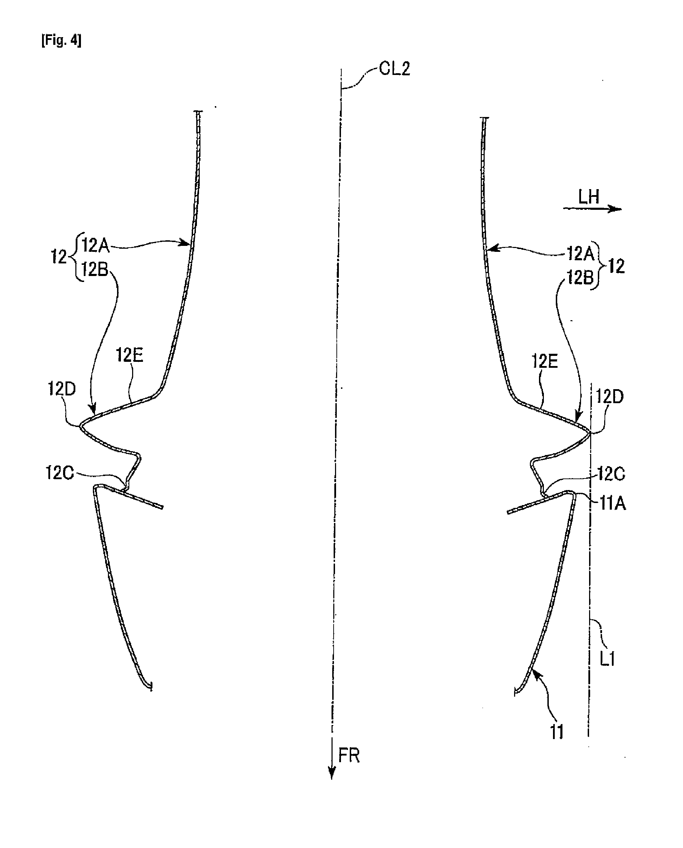

Fig. 4 shows a cross section taken along a line A-A in Fig. 2. In the upper side body covers 12, the front portion 12C of the upper inner leg shield portion 12B is arranged more inside in the vehicle widthwise direction than an outer side portion of the rear end portion 11A of the outer leg shield 11. Further, as can be clearly understood from a straight line L1 which passes the rear side portion 12D and extends along the center line CL2, the rear side portion 12D of the upper inner leg shield portion 12B is arranged more outside in the vehicle widthwise direction than the outer side portion of the rear end portion 11A of the outer leg shield 11.

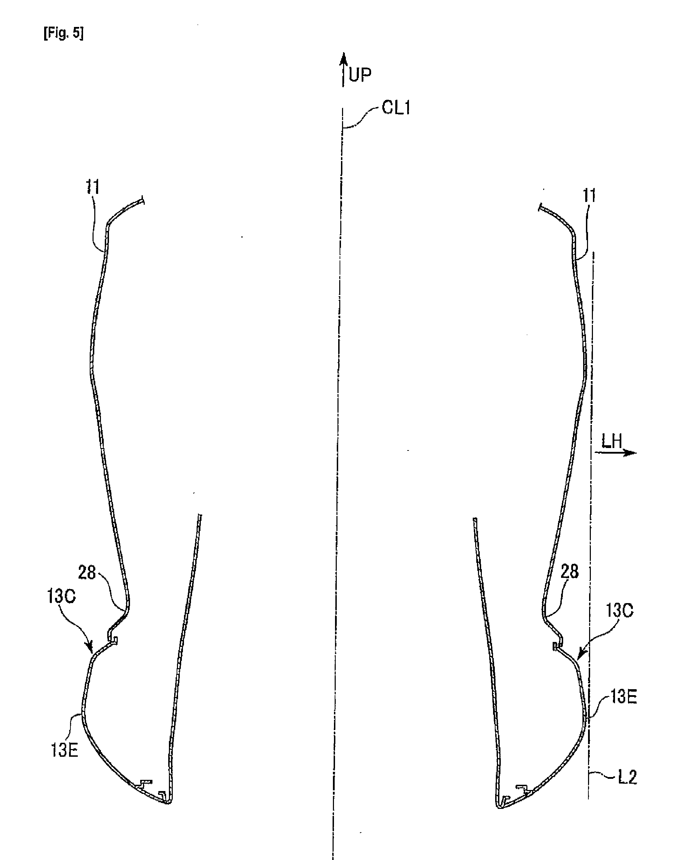

Further, as shown in Fig. 2, one upper side of the front portion 13D of the lower inner leg shield portion 13C is arranged along a rear-end lower portion 11B which is contiguously formed with a lower side of the rear end portion 11A of the outer leg shield 11 and extends in the frontward and downward direction. Further, Fig. 5 shows a cross section taken along a line B-B in Fig. 2. As can be clearly understood from a straight line L2 which passes the rear side portion 13E and extends along the center line CL1, the rear side portion 13E of the lower inner leg shield portion 13C is arranged more outside in the vehicle widthwise direction than an outer side portion of the outer leg shield 11.

In the upper inner leg shield portion 12B of the upper side body cover 12, a side wall which is contiguously formed with the rear side portion 12D from the front portion 12C includes a portion having a shape which extends outward in the vehicle widthwise direction as the side wall extends rearward. In the lower inner leg shield 13C of the lower side body cover 13, a side wall which is contiguously formed with the rear side portion 13E from the front portion 13D is formed into a shape such that the side wall extends outward in the vehicle widthwise direction as the side wall extends rearward.

The rear side portion 12D of the upper inner leg shield portion 12B and the rear side portion 13E of the lower inner leg shield portion 13C are vertically contiguously formed and extend rearward and upward and, as shown in Fig. 3, the rear side portion 12D of the upper inner leg shield portion 12B and the rear side portion 13E of the lower inner leg shield portion 13C project more outward in the vehicle widthwise direction than the rear end portion 11A and the rear-end lower portion 11B of the outer leg shield 11 as a whole.

That is, in this embodiment, the rear side portion 12D of the upper inner leg shield portion 12B and the rear side portion 13E of the lower inner leg shield portion 13C form a bumper portion 21 which projects more outward in the vehicle widthwise direction than a side end portion of the outer leg shield 11.

Further, as shown in Fig. 2 and Fig. 3, the bumper portion 21 includes a middle bumper portion 22 which extends in a substantially straight line in the vertical direction of the vehicle as viewed in a front view of the vehicle and extends rearward and upward as viewed in a side view of the vehicle, an upper bumper portion 23 which is connected to an upper rear end of the middle bumper portion 22 and extends outward in the vehicle widthwise direction as the upper bumper portion 23 extends toward an upper side of the vehicle, and a lower bumper portion 24 which is connected to a lower end of the middle bumper portion 22 as shown in Fig. 2 and is arranged to be routed around a lower side of the outer leg shield 11.

The lower bumper portion 24 is constituted of the rear side portion 13E of the lower inner leg shield portion 13C. The upper bumper portion 23 is constituted of an upright bumper portion 25 which is arranged with a gap formed between the upright bumper portion 25 and a rear edge (rear end portion 11A) of the outer leg shield 11 and extends in the vertical direction of the vehicle, and a fin bumper portion 26 which extends rearward and upward in the longitudinal direction of the vehicle from a front side of the vehicle and is connected to the upright bumper portion 25 in a state where the fin bumper portion 26 intersects with and is connected to the upright bumper portion 25 in a T shape.

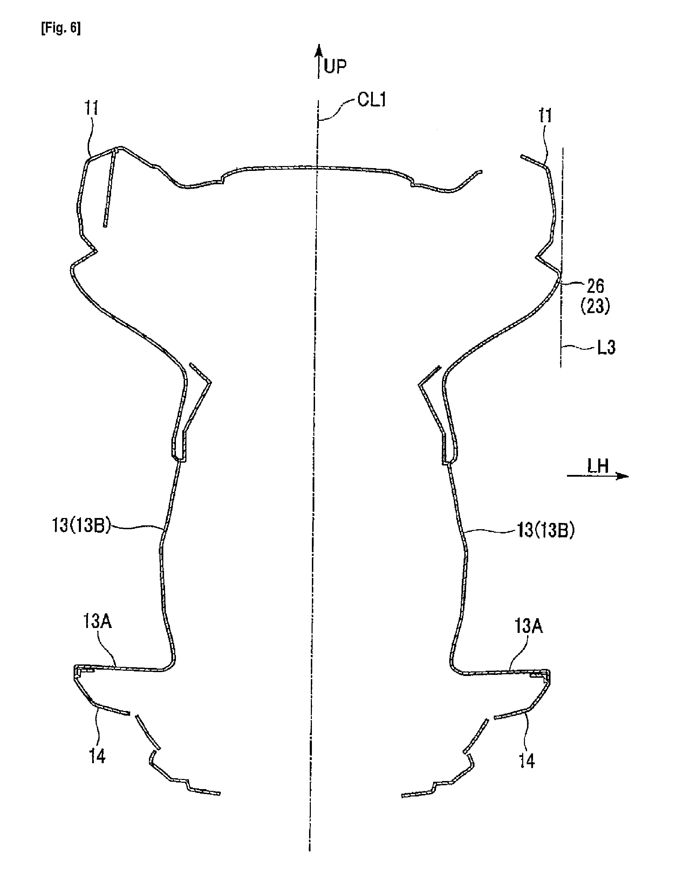

The fin bumper portion 26 extends rearward and upward along one upper side of the rear end portion 11A of the outer leg shield 11. Fig. 6 shows a cross section taken along a line C-C in Fig. 2. Also a side edge portion of the fin bumper portion 26, as can be clearly understood from a straight line L3 which passes the side edge portion and extends along the center line CL1, projects more outward in the vehicle widthwise direction than the outer leg shield 11. Accordingly, when the motorcycle 1 is inclined, the bumper portion 21 which is constituted of the middle bumper portion 22, the upper bumper portion 23 and the lower bumper portion 24 is brought into contact with the ground earlier than the outer leg shield 11.

On the other hand, as shown in Fig. 2, in the inner leg shield portion 12B, three ventilation holes 27 are formed in a front portion of the upright bumper portion 25 in a penetrating manner in the vehicle widthwise direction in a state where the ventilation holes 27 are arranged parallel to each other in the vertical direction. Further, on a lower side wall of the outer leg shield 11 which is positioned in front of and below the middle bumper portion 22 and is positioned above and in front of the lower bumper portion 24, a recessed portion 28 which is recessed inward in the vehicle widthwise direction and extends rearward and upward from a front side of the vehicle is formed.

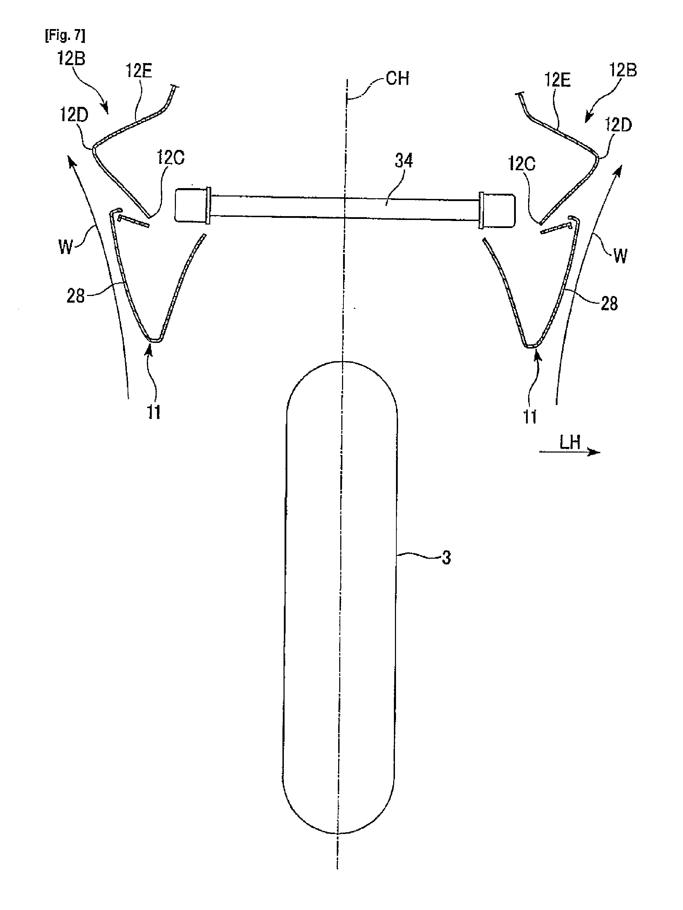

By forming the above-mentioned recessed portion 28, as indicated by an arrow W in Fig. 7, at the outer leg shield 11, a traveling wind flows rearward along a side of the recessed portion 28. Then, a traveling wind from the recessed portion 28 flows outward in the vehicle widthwise direction due to an inclined surface which is formed between the front portion 12C and the rear side portion 12D at the upper inner leg shield portion 12B and extends outward in the vehicle widthwise direction as the inclined surface extends rearward. In the drawing, symbol 34 indicates a radiator which is covered with the outer leg shield 11 and the upper inner leg shield portion 12B.

As described above, in the above-mentioned embodiment, the leg shield (the outer leg shield 11, the upper inner leg shield portions 12B, the lower inner leg shield portions 13C) which covers the leg portions L of the rider D from a front side is constituted of the outer leg shield 11 which includes the coated surface portion 17, and the upper inner leg shield portions 12B and the lower inner leg shield portions 13C which include the colored surface portions 18, 19, are arranged behind the outer leg shield 11 and have the front portions 12C, 13C thereof arranged more inside in the vehicle widthwise direction than the outer leg shield 11, and the rear portions (rear side portions 12D, 13E) of the upper inner leg shield portions 12B and the lower inner leg shield portions 13C are arranged more outside in the vehicle widthwise direction than the outer leg shield 11 thus constituting the bumper portion 21.

Accordingly, the upper inner leg shield portions 12B and the lower inner leg shield portions 13C having the colored surface portions 18, 19 are arranged to project outward in the vehicle widthwise direction from the rear portion of the outer leg shield 11, and the bumper portions 21 each of which is constituted of the rear portion of the upper inner leg shield portion 12B and the rear portion of the lower inner leg shield portion 13C are arranged more outside in the vehicle widthwise direction than the outer leg shield 11 and hence, even when the inner leg shield is brought into contact with a ground to an extent that a portion of the inner leg shield in the vicinity of an upper portion of the vehicle is brought into contact with the ground in a state where the vehicle falls sideways, it is possible to bring the colored bumper portion 21 into contact with the ground first and hence, the outer leg shield 11 having the coated surface portions 17 can be easily protected. Further, the upper inner leg shield portions 12B and the lower inner leg shield portions 13C are formed into a shape where these inner leg shield portions extend outward in the vehicle widthwise direction as the inner leg shield portions 12B, 13C extend rearward and hence, it is possible to make traveling wind flow outward in the vehicle widthwise direction more positively whereby a windshield effect of the leg shield can be enhanced.

Further, in this embodiment, the bumper portion 21 which is constituted of the rear portion of the upper inner leg shield portion 12B and the rear portion of the lower inner leg shield portion 13C includes the lower bumper portion 24 which is arranged to be routed around the lower side (rear-end lower portion 11B) of the outer leg shield 11. Accordingly, by bringing the lower bumper portion 24 into contact with the ground first when the vehicle falls sideways, it is more surely possible to bring the upper inner leg shield portion 12B and the lower inner leg shield portion 13C into contact with the ground first and hence, the outer leg shield 11 can be easily protected.

In addition, the bumper portion 21 includes the middle bumper portion 22 which extends in a substantially straight line in the vertical direction of the vehicle, and the upper bumper portion 23 which is connected to an upper rear end of the middle bumper portion 22 and extends outward in the vehicle widthwise direction as the upper bumper portion 23 extends toward an upper side of the vehicle and hence, even when an upper portion of the vehicle is brought into contact with the ground when the vehicle falls sideways, by bringing the upper bumper portion 23 into contact with the ground, the outer leg shield 11 which includes the coated surfaces can be easily protected.

Further, the upper bumper portion 23 includes the upright bumper portion 25 which is arranged with the gap formed between the upright bumper portion 25 and the rear end portion 11A of the outer leg shield 11 and extends in the vertical direction of the vehicle, and the fin bumper portion 26 which extends in the rearward and upward direction from a front side of the vehicle and intersects with the upright bumper portion 25 in a T shape. Accordingly, the rigidity of the bumper portion 21 can be enhanced by forming the ground contact portion of the upper bumper portion 23 into a T shape, and the strength of the bumper portion 21 can be easily secured by further elongating the ground contact portion.

Further, the recessed portion 28 which is recessed inward in the vehicle widthwise direction and extends in the longitudinal direction of the vehicle or in the rearward and upward direction from the front side of the vehicle is formed on the side wall of the outer leg shield 11. Accordingly, by making a traveling wind impinge on the inclined surfaces of the upper inner leg shield portions 12B and the inclined surfaces of the lower inner leg shield portions 13C more positively, it is possible to deflect the traveling wind outward in the vehicle widthwise direction.

Here, in this embodiment, although the explanation is made with respect to the case where the present invention is applied to the motorcycle, the present invention is also preferably applicable to a three-wheeled vehicle, a four-wheeled buggy and the like. Further, the present invention is also preferably applicable to an electrically-operated motorcycle or a fuel-cell powered vehicle.

Further, in this embodiment, the inner leg shield which is positioned behind the outer leg shield 11 is constituted of the upper inner leg shield portion 12B of the upper side body cover 12 and the lower inner leg shield portion 13C of the lower side body cover 13. However, portions corresponding to the upper inner leg shield portion 12B and the lower inner leg shield portion 13C may be formed as independent cover members. Further, there arises no problem in adopting the constitution such that portions corresponding to the upper inner leg shield portion 12B and the lower inner leg shield portion 13C are formed as an integral cover member.
1: motorcycle (saddle-ride-type vehicle)
10: seat
11: outer leg shield (leg shield)
12B: upper inner leg shield portion (leg shield, inner leg shield)
13C: lower inner leg shield portion (leg shield, inner leg shield)
17: coated surface portion
18, 19: colored surface portion
21: bumper portion
22: middle bumper portion
23: upper bumper portion
24: lower bumper portion
25: upright bumper portion
26: fin bumper portion
28: recessed portion

## Claims

1. A saddle-ride-type vehicle with a leg shield structure, the saddle-ride-type vehicle comprising: a seat (10) on which a rider sits; and a leg shield (11, 12B, 13C) which is arranged in front of the seat (10) and covers a leg portion of the rider from a front side, the leg shield (11, 12B, 13C) including a coated surface portion (17) to which coating is applied and a colored surface portion (18, 19) where a ground of a raw material is exposed,
wherein the leg shield (11, 12B, 13C) is constituted of an outer leg shield (11) which includes the coated surface portion (17), and an inner leg shield (12B, 13C) which includes the colored surface portion (18, 19), is arranged behind the outer leg shield (11) and has a front portion thereof arranged more inside in the vehicle widthwise direction than the outer leg shield (11),
a rear portion of the inner leg shield (12B, 13C) is arranged more outside in the vehicle widthwise direction than the outer leg shield (11) thus forming a bumper portion (21), wherein the bumper portion (21) of the inner leg shield (12B, 13C) includes a middle bumper portion (22) which extends in a substantially straight line in the vertical direction of the vehicle,
**characterized in that**
the bumper portion (21) of the inner leg shield (12B, 13C) further includes an upper bumper portion (23) which is connected to an upper rear end of the middle bumper portion (22) and extends outward in the vehicle widthwise direction as the upper bumper portion (23) extends toward an upper side of the vehicle.

2. The saddle-ride-type vehicle according to claim 1,
**characterized in that**
the bumper portion (21) of the inner leg shield (12B, 13C) includes a lower bumper portion (24) which is arranged to be routed around a lower side of the outer leg shield (11).

3. The saddle-ride-type vehicle according to claim 1,
**characterized in that**
the upper bumper portion (23) includes an upright bumper portion (25) which is arranged with a gap formed between the upright bumper portion (25) and a rear edge of the outer leg shield (11) and extends in the vertical direction of the vehicle, and a fin bumper portion (26) which extends in the longitudinal direction of the vehicle or in the rearward and upward direction from a front side of the vehicle and intersects with the upright bumper portion (25) in a T shape.

4. The saddle-ride-type vehicle with according to any one of claims 1 to 3,
**characterized in that**
Sa recessed portion (28) which is recessed inward in the vehicle widthwise direction and extends in the longitudinal direction of the vehicle or in the rearward and upward direction from a front side of the vehicle is formed on a side wall of the outer leg shield (11).

## Patentansprüche

1. Fahrzeug vom Sattelfahrtyp mit einer Beinschildkonstruktion, wobei das Fahrzeug vom Sattelfahrtyp weist: Einen Sitz (10) auf dem ein Fahrer sitzt; und ein Beinschild (11, 12B, 13C), das vor dem Sitz (10) angeordnet ist und einen Beinabschnitt des Fahrers von einer Vorderseite abdeckt, wobei das Beinschild (11, 12B, 13C) einen beschichteten Oberflächenabschnitt (17) umfasst, auf dem eine Beschichtung aufgebracht ist, und einen farbigen Oberflächenabschnitt (18, 19), wo ein Untergrund eines Rohmaterials offenliegt,
wobei das Beinschild (11, 12B, 13C) durch ein äußeres Beinschild (11), das den beschichteten Oberflächenabschnitt (17) umfasst, und ein inneres Beinschild (12B, 13C), das den farbigen Oberflächenabschnitt (18, 19) umfasst, gebildet wird und hinter dem äußeren Beinschild (11) angeordnet ist und einen vorderen Abschnitt hat, der in der Fahrzeugbreitenrichtung weiter innen angeordnet ist als das äußere Beinschild (11),
ein hinterer Abschnitt des hinteren Beinschilds (12B, 13C) weiter außerhalb in der Fahrzeugbreitenrichtung angeordnet ist als das äußere Beinschild (11) und damit einen Stoßleistenabschnitt (21) bildet, wobei der Stoßleistenabschnitt (21) des inneren Beinschilds (12B, 13C) einen mittleren Stoßleistenabschnitt (22) umfasst, der sich in einer im Wesentlichen geraden Linie in der vertikalen Richtung des Fahrzeugs erstreckt,
**dadurch gekennzeichnet, dass**
der Stoßleistenabschnitt (21) des inneren Beinschilds (12B, 13C) außerdem einen oberen Stoßleistenabschnitt (23) umfasst, der mit einem oberen hinteren Ende des mittleren Stoßleistenabschnitts (22) verbunden ist und sich in der Fahrzeugbreitenrichtung nach außen erstreckt, so wie sich der obere Stoßleistenabschnitt (23) auf die obere Seite des Fahrzeugs zu erstreckt.

2. Fahrzeug vom Sattelfahrtyp gemäß Anspruch 1,
**dadurch gekennzeichnet, dass**
der Stoßleistenabschnitt (21) des inneren Beinschilds (12B, 13C) einen unteren Stoßleistenabschnitt (24) umfasst, der so angeordnet ist, dass er um eine untere Seite des äußeren Beinschilds (11) herum verläuft.

3. Fahrzeug vom Sattelfahrtyp gemäß Anspruch 1,
**dadurch gekennzeichnet, dass**
der obere Stoßleistenabschnitt (23) einen aufrechten Stoßleistenabschnitt (25) umfasst, der mit einem Spalt angeordnet ist, der zwischen dem aufrechten Stoßleistenabschnitt (25) und einer hinteren Kante des äußeren Beinschilds (11) gebildet wird und sich in der vertikalen Richtung des Fahrzeugs erstreckt, und einen Rippen-Stoßleistenabschnitt (26), der sich in der Längsrichtung des Fahrzeugs oder in einer hinteren und nach oben gerichteten Richtung von einer vorderen Seite des Fahrzeugs erstreckt und sich mit dem aufrechten Stoßleistenabschnitt (25) in einer T-Geometrie schneidet.

4. Fahrzeug vom Sattelfahrtyp gemäß irgendeinem der Ansprüche 1 bis 3,
**dadurch gekennzeichnet, dass**
ein ausgenommener Abschnitt (28), der nach innen in der Fahrzeugbreitenrichtung ausgenommen ist und sich in der Längsrichtung des Fahrzeugs oder in einer nach hinten und oben gerichteten Richtung von einer Vorderseite des Fahrzeugs erstreckt, an einer Seitenwand des äußeren Beinschilds (11) gebildet ist.

## Revendications

1. Véhicule de type à selle avec une structure de protège-jambe, le véhicule de type à selle comprenant : une selle (10) sur laquelle un motocycliste s'assoit ; et un protège-jambe (11, 12B, 13C) qui est agencé en face de la selle (10) et recouvre une partie de jambe du motocycliste depuis un côté avant, le protège-jambe (11, 12B, 13C) comprenant une partie de surface recouverte (17) sur laquelle on applique un revêtement et une partie de surface colorée (18, 19) où est exposé un fond d'une matière première,
dans lequel le protège-jambe (11, 12B, 13C) est constitué d'un protège-jambe externe (11) qui comprend la partie de surface recouverte (17) et un protège-jambe interne (12B, 13C) qui comprend la partie de surface colorée (18, 19), est agencé derrière le protège-jambe externe (11) et a sa partie avant agencée plus à l'intérieur dans le sens de la largeur du véhicule que le protège-jambe externe (11),
une partie arrière du protège-jambe interne (12B, 13C) est agencée plus à l'extérieur dans le sens de la largeur du véhicule que le protège-jambe externe (11), formant ainsi une partie de pare-chocs (21), dans lequel la partie de pare-chocs (21) du protège-jambe interne (12B, 13C) comprend une partie de pare-chocs centrale (22) qui s'étend sur une ligne sensiblement droite dans la direction verticale du véhicule,
**caractérisé en ce que** :
la partie de pare-chocs (21) du protège-jambe interne (12B, 13C) comprend en outre une partie de pare-chocs supérieure (23) qui est raccordée à une extrémité arrière supérieure de la partie de pare-chocs centrale (22) et s'étend vers l'extérieur dans le sens de la largeur du véhicule lorsque la partie de pare-chocs supérieure (23) s'étend vers un côté supérieur du véhicule.

2. Véhicule de type à selle selon la revendication 1, **caractérisé en ce que** :
la partie de pare-chocs (21) du protège-jambe interne (12B, 13C) comprend une partie de pare-chocs inférieure (24) qui est agencée pour se diriger autour d'un côté inférieur du protège-jambe externe (11).

3. Véhicule de type à selle selon la revendication 1, **caractérisé en ce que** :
la partie de pare-chocs supérieure (23) comprend une partie de pare-chocs montante (25) qui est agencée avec un espace formé entre la partie de pare-chocs montante (25) et un bord arrière du protège-jambe externe (11) et s'étend dans la direction verticale du véhicule et une partie de pare-chocs d'aileron (26) qui s'étend dans la direction longitudinale du véhicule ou dans la direction vers l'arrière et vers le haut à partir d'un côté avant du véhicule et coupe la partie de pare-chocs montante (25) selon une forme de T.

4. Véhicule de type à selle selon l'une quelconque des revendications 1 à 3, **caractérisé en ce que** :
une partie évidée (28) qui est évidée vers l'intérieur dans le sens de la largeur du véhicule et s'étend dans la direction longitudinale du véhicule ou dans la direction vers l'arrière et vers le haut à partir d'un côté avant du véhicule est formée sur une paroi latérale du protège-jambe externe (11).
